# EUROPÄISCHE PATENTANMELDUNG

(11) **EP 1 110 815 A2**
(43) Veröffentlichungstag der Anmeldung: **27.06.2001**
(21) Anmeldenummer: 00126388.8
(22) Anmeldetag: 02.12.2000
(51) Int. Cl.: B60Q 1/14

(54) **Verfahren zum automatischen Schalten von Aussenbeleuchtungseinrichtungen eines Kraftfahrzeugs**

(30) Priorität: 23.12.1999 DE 19962394
(71) Anmelder: ROBERT BOSCH GMBH, 70442 Stuttgart (DE)
(72) Erfinder: Schmitt, Patrick, 77839 Lichtenau (DE); Hog, Norbert, 77815 Buehl (DE); Hodapp, Bruno, 77855 Achern-Oensbach (DE); Michenfelder, Gebhard, 77839 Lichtenau (DE); Pientka, Rainer, 77871 Renchen (DE); Meier, Hans, 77833 Ottersweier (DE); Blitzke, Henry, 77815 Buehl (DE); Burkart, Manfred, 76473 Iffezheim (DE)

(57) **Zusammenfassung**

Verfahren und Einrichtung zum Schalten von Außenbeleuchtungseinrichtungen eines Kraftfahrzeugs, wobei die Position, Zeit und weitere Umfeldbedingungen als Parameter herangezogen werden.

## Beschreibung

### Stand der Technik

Die Erfindung betrifft ein Verfahren zum automatischen Schalten von Außenbeleuchtungseinrichtungen eines Kraftfahrzeugs nach Gattung der unabhängigen Ansprüche.

Es ist schon ein Verfahren zum automatischen Schalten von Außenbeleuchtungseinrichtungen bei Kraftfahrzeugen aus der DE 195 23 262 A1 bekannt, bei der die Außenbeleuchtungseinrichtungen in Abhängigkeit von einer Umgebungshelligkeit gesteuert werden. Durch einen Globalund einen Richtungssensor wird die Umgebungshelligkeit richtungssensitiv gemessen und die Außenbeleuchtungseinrichtungen in Abhängigkeit dieser Meßgrößen ein- und ausgeschaltet. Bei diesem System werden nicht unter allen Bedingungen optimale Schaltzustände erreicht.

### Vorteile der Erfindung

Das erfindungsgemäße Verfahren mit den kennzeichnenden Merkmalen des Hauptanspruchs hat den Vorteil, daß durch das Schalten der Außenbeleuchtungseinrichtungen in Abhängigkeit von Position und Zeit in der das Kraftfahrzeug betrieben wird, Bereiche vorgegeben werden können, in denen die Außenbeleuchtungseinrichtungen beispielsweise in jedem Falle eingeschaltet sein sollen. So kann das System auch auf die gesetzlichen Regelungen in verschiedenen Staaten abgestimmt sein. Beispielsweise können in bestimmten Bereichen die Außenbeleuchtungseinrichtungen im Winter bei jeder Fahrzeugbewegung eingeschalten sein.

Wird noch eine weitere Umfeldbedingung erfaßt und die Außenbeleuchtungseinrichtungen in Abhängigkeit von Position, Zeit und dieser weiteren Umfeldbedingung geschaltet, so können die Außenbeleuchtungseinrichtungen gezielt auf weitere Umfeldbedingungen wie beispielsweise Straßenverhältnisse oder Helligkeit reagieren. Natürlich können auch mehrere Umfeldbedingungen gleichzeitig erfaßt und verarbeitet werden.

Als besonders vorteilhaft erweist es sich, die weitere Umfeldbedingung in Abhängigkeit eines Parameters bei der Steuerung der Außenbeleuchtungseinrichtungen zu berücksichtigen; so kann beispielsweise die Empfindlichkeit eines Sensors von Position und Zeit abhängen.

Wird auf die Umgebungshelligkeit als weitere Umfeldbedingungen reagiert, so können die Außenbeleuchtungseinrichtungen auch dann automatisch geschaltet werden, wenn tagsüber plötzlich eine Verdunklung beispielsweise durch Wolken eintrifft, wobei trotzdem gewährleistet ist, daß beispielsweise Nachts auch in hell beleuchteten Tunneln oder Straßenzügen die Beleuchtungseinrichtungen eingeschaltet bleiben.

Ist die weitere Umfeldbedingung die Geschwindigkeit, ergibt sich ein weiterer Vorteil, da es über aus sinnvoll ist bei hoher Geschwindigkeit, die Außenbeleuchtungseinrichtungen - trotz konstanter Umgebungshelligkeit - früher einzuschalten als bei niedriger Geschwindigkeit, da das "gesehen werden" mit steigender Geschwindigkeit zu einem immer wichtigeren Faktor wird.

Vorteilhaft ist weiterhin, wenn ein Funksignal als weitere Umfeldbedingung erfaßt wird. Über Zusatzdienste der Radiostationen können Zusatzinformationen, wie Nebelgebiete und Falschfahrer auf Autobahnen übermittelt werden. Auf diese Weise können in einem Nebelgebiet - fremdgesteuert durch das Funksignal - die Außenbeleuchtungseinrichtungen sämtlicher Fahrzeuge eingeschaltet werden.

Sind darüber hinaus Sollbereiche für die Position und die Zeit bestimmt, innerhalb derer die Außenbeleuchtungseinrichtungen eingeschalten sein sollen oder müssen, so sind juristische und natürliche Gegebenheiten einfach zu berücksichtigen. Sind beispielsweise die verschiedenen Nachtzeiten für verschiedene Jahreszeiten an den verschiedenen Orten als Sollbereiche bestimmt können die Außenbeleuchtungseinrichtungen entsprechend geschaltet werden.

Befindet sich im Fahrzeug ein Navigationssystem, so kann die Position des Fahrzeugs ermittelt werden, wobei über eine Karteneinrichtung, welche sich im Navigationssystem befindet, der Straßentyp und damit der Verkehrsraum bestimmt werden. So können die Einschaltzeitpunkte der Außenbeleuchtungseinrichtungen auch in Abhängigkeit des Straßentyps bestimmt werden. Dies ist insbesondere dann vorteilhaft, wenn beispielsweise auf einer Autobahn oder Kraftfahrstraße mit sehr hoher Durchschnittsgeschwindigkeit die Außenbeleuchtungseinrichtung früher eingeschaltet werden soll als auf einem Feldweg mit erfahrungsgemäß niedriger Geschwindigkeit.

Weist die erfindungsgemäße Einrichtung zum automatischen Schalten von Außenbeleuchtungseinrichtungen eine Positionserfassungseinrichtung, eine Zeiterfassungseinrichtung und eine Verarbeitungseinrichtung zur Steuerung der Außenbeleuchtungseinrichtungen auf, können die Außenbeleuchtungseinrichtungen in Abhängigkeit der Signale der Positionserfassungseinrichtung und der Zeiterfassungseinrichtung mit Hilfe eines in der Verarbeitungseinrichtung abgelegten Algorithmus geschaltet werden.

Besonders vorteilhaft ist, wenn die Einrichtung mindestens einen Sensor zur Erfassung einer weiteren Umfeldbedingung aufweist, dessen Signale der Verarbeitungseinrichtung zugeführt werden, da so weitere Umfeldbedingungen im Algorithmus der Verarbeitungseinrichtung berücksichtigt werden können.

Werden die Signale des Sensors über einen Parameter verarbeitet, so können diese in der Verarbeitungseinrichtung in vorteilhafter Weise mehr oder weniger stark gewichtet werden.

Ist dieser Parameter von Position und Zeit abhängig, kann beispielsweise die Empfindlichkeit des Sensors abhängig von Position und Zeit eingestellt werden.

Wird als Positionserfassungseinrichtung ein im Kraftfahrzeug angeordnetes Navigationssystem verwendet, so braucht nur wenig zusätzliche Hardware verwendet werden, da Navigationssysteme in Kraftfahrzeugen immer häufiger anzutreffen sind, und deren Signale noch effektiver verarbeitet werden können.

Weist das Navigationssystem eine Karteneinrichtung auf, so kann bei bekannter Position der Straßentyp, beispielsweise Kraftfahrstraße, Autobahn oder Feldweg, auf dem das Fahrzeug sich gerade bewegt, festgestellt werden.

Ist der Parameter vom Straßentyp abhängig, kann vorteilhafter Weise die Empfindlichkeit des Sensors genau auf den Straßentyp eingestellt werden.

Weiterhin vorteilhaft ist es eine Umgebungshelligkeitsmeßeinrichtung als Sensor vorzusehen, da die Umgebungshelligkeit die entscheidende Größe ist, auf Basis der die Schaltung des Lichtes erfolgen soll.

Weist die Zeiterfassungseinrichtung eine ferngesteuerte Uhr mit Datumserfassung auf, sind Fehler, welche durch eine falsche Uhrzeit oder ein falsches Datum verursacht sind, nahezu ausgeschlossen. Ein willkürliches Ein- oder Ausschalten der Außenbeleuchtungseinrichtungen ist somit fast unmöglich, was wesentlich zur Verkehrssicherheit beiträgt.

Ist ein Sollbereich in einer mit der Verarbeitungseinrichtung verbundenen Speichereinrichtung abgelegt, so können dort Sollbereiche für verschiedene Regionen oder Kontinente abgelegt sein. Ist die Speichereinrichtung weiter als wechselbares Modul ausgebildet, in der beispielsweise auch der Algorithmus der Verarbeitungseinrichtung selbst abgelegt ist, kann ein Höchstmaß an Flexibilität erreicht werden, in dem beispielsweise verschiedene Module für die einzelnen Kontinente, Regionen oder Fahrerprofile leicht austauschbar sind.

So ist es auch von besonderem Vorteil, wenn in einer Speichereinrichtung eine Vielzahl von Sollbereichen abgelegt sind, welche von Sonnenauf- und Sonnenuntergang abhängig sind. So ist für jeden Ort, an dem sich das Fahrzeug befindet, die entsprechende Sonnenauf- und untergangszeit ermittelbar, wodurch wichtige Steuergrößen für das Ein- bzw. Ausschalten der Außenbeleuchtungseinrichtungen abgelegt sind.

### Zeichnungen

Ausführungsbeispiele der Erfindung sind in den folgenden Zeichnungen dargestellt und in der nachfolgenden Beschreibung näher erläutert. Es zeigen:
Figur 1 eine schematische Darstellung des erfindungsgemäßen Verfahrens,
Figur 2 eine schematische Darstellung einer erfindungsgemäßen Einrichtung und
Figur 3 ein Diagramm mit Sonnenauf- und Sonnenuntergangszeiten als Ordinate über den Jahreszeiten in Monaten

### Beschreibung des Ausführungsbeispiels

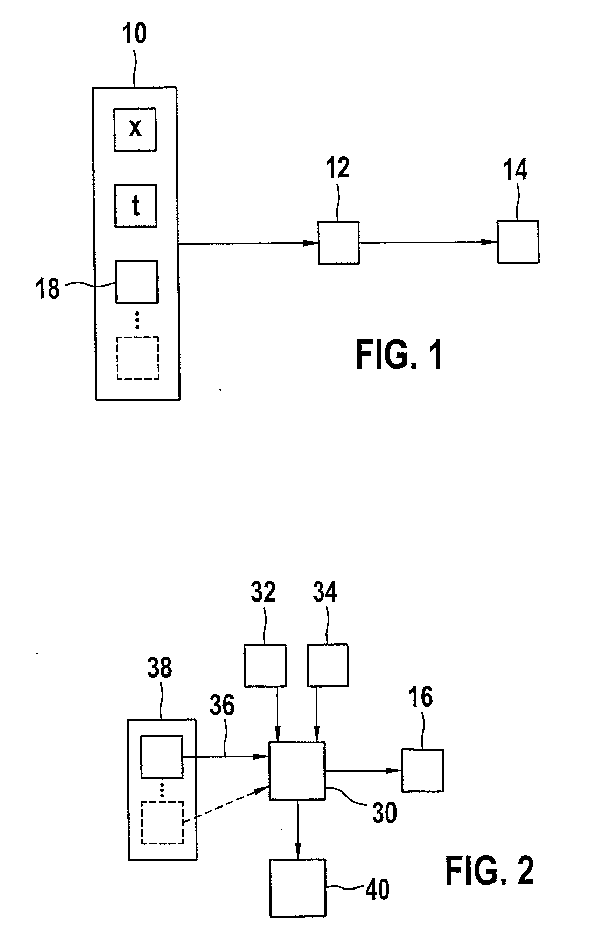

In Figur 1 ist eine schematische Darstellung des erfindungsgemäßen Verfahrens dargestellt.

In einem ersten Schritt 10 wird Position x und Zeit t in der das Kraftfahrzeug betrieben wird erfaßt. In einem zweiten Schritt 12 werden die erfaßten Parameter Position und Zeit verarbeitet und in einem dritten Schritt 14 werden die Außenbeleuchtungseinrichtungen 16 in Abhängigkeit des Verarbeitungsergebnisses geschaltet.

Außer der Erfassung von Position und Zeit, können gleichzeitig oder nacheinander noch eine oder mehrere weitere Umfeldbedingungen 18 in die Verarbeitung einfließen.

Figur 2 zeigt eine erfindungsgemäße Einrichtung in schematischer Darstellung.

Eine Verarbeitungseinrichtung 30, welche beispielsweise als *µ*C ausgebildet ist, ist mit den Außenbeleuchtungseinrichtungen 16, mit einer Positionserfassungseinrichtung 32 und mit einer Zeiterfassungseinrichtung 34, welche neben der Uhrzeit auch das Datum erfaßt, verbunden. Signale 36 eines Sensors 38, welcher eine weitere Umfeldbedingung 18 detektiert, werden der Verarbeitungseinrichtung 30 ebenfalls zugeführt.

Im Folgenden wird die Funktion der erfindungsgemäßen Einrichtung erläutert.

Durch die Positionserfassungseinrichtung 32 und die Zeiterfassungseinrichtung 34 werden die Position und die Zeit als während des Betriebs herrschende Umfeldbedingungen erfaßt.

Als Zeiterfassungseinrichtung 34 ist es in Europa beispielsweise denkbar, eine das DCF 77-Signal empfangende Uhr zu verwenden. Diese liefert, außer einer genauen Angabe der Uhrzeit, auch noch das Datum; jedoch ist auch eine einfache elektronische Uhr möglich.

Als Positionserfassungseinrichtung 32 kann beispielsweise ein Navigationsgerät dienen, wie es bereits in vielen Fahrzeugen anzutreffen ist. Diese enthalten normalerweise einen GPS oder Differential GPS-Empfänger, welcher die Position mit hinreichender Genauigkeit ermittelt.

Die Verarbeitungseinrichtung 30 steuert aufgrund dieser Daten mit Hilfe eines in der Verarbeitungseinrichtung 30 abgelegten Algorithmus die Außenbeleuchtungseinrichtungen 16. Dieser Algorithmus besteht aus einer oder mehreren Tabellen, in denen die Sonnenauf- und Sonnenuntergangszeiten für jeden Ort abgelegt sind. Hierbei genügt es, pro Zeitzone eine Tabelle abzulegen, wobei auch Zeitzonen weggelassen werden können.

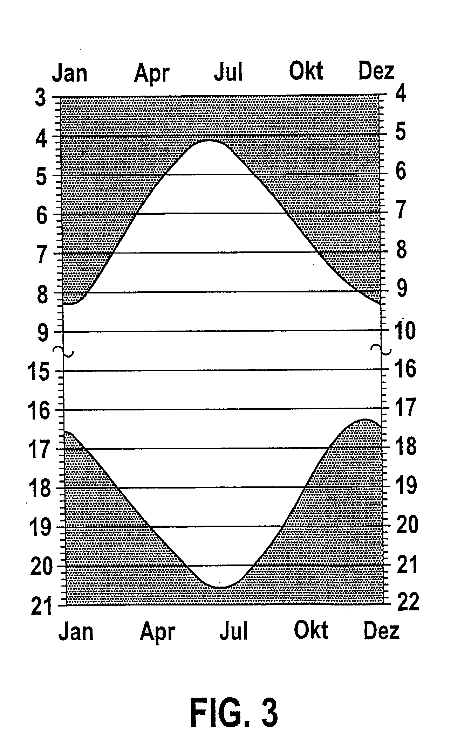

In Figur 3 ist eine solche Tabelle für einen Ort, beziehungsweise eine Zeitzone gezeigt. Auf der Abszisse sind die Monate und auf der Ordinate die Uhrzeit aufgetragen. Im mittleren hellen Bereich des Diagramms sind die hellen Tagzeiten - in Mitteleuropa also im Juni am längsten, in den dunklen äußeren Bereichen die Nachzeiten - in Mitteleuropa im Dezember am längsten - zu sehen.

Bei Nacht - was die Verarbeitungseinrichtung 30 aufgrund des Ortes, des Datums und der Uhrzeit feststellt - können so die Außenbeleuchtungseinrichtungen 16 automatisch eingeschaltet werden. Durch diese Tabelle werden also Sollbereiche vorgegeben, in denen die Außenbeleuchtungseinrichtungen 16 immer eingeschaltet werden.

Im Regelfall wird die Verarbeitungseinrichtung 30 auch das Zündsignal berücksichtigen oder nur bei aktiver Zündung in Betrieb sein um ein entladen der Fahrzeugbatterie zu verhindern.

Als vorteilhafte Weiterbildung wird die Umgebungshelligkeit als weitere Umfeldbedingung 18 vom Sensor 38 erfaßt, und dessen Signale 36 an die Verarbeitungseinrichtung 30 weitergegeben. Diese wertet die Signale 36 dahingehend aus, daß bei Unterschreiten einer definierten Schaltschwelle die Außenbeleuchtungseinrichtungen 16 eingeschaltet werden. Zusätzlich wird die definierte Schaltschwelle über einen Parameter eine Stunde vor Sonnenuntergang nach unten, also in einen Bereich höherer Empfindlichkeit gesetzt.

In einer weiteren Variation weist die Positionserfassungseinrichtung 32 eine Karteneinrichung auf, wie es bei Navigationsgeräten in der Regel der Fall ist, so daß der Verarbeitungseinrichtung 30 zu jedem Zeitpunkt bekannt ist auf welcher Straße sich das Kraftfahrzeug momentan befindet. Über den Parameter wird nun die Schaltschwelle bei einer Autobahnfahrt nach unten, und damit die Empfindlichkeit des Sensors 38 nach oben gesetzt.

Analog dazu kann mit einem Geschwindigkeitssignal als weitere Umfeldbedingung verfahren werden.

Weiter kann auch ein Funksignal, wie es beispielsweise von Radio-Stationen verbreitet wird, als weitere Umfeldbedingung 18 erfaßt werden. Radio-Stationen strahlen - außer ihrem normalen Programm - auch Zusatzdienste aus, was insbesondere beim Digital-Audio-Broadcasting (DAB) der Fall ist. Werden über einen solchen Dienst beispielsweise Nebelinformationen (Nebelgebiet, Nebeldichte), Niederschlagsinformationen oder andere Informationen welche ein Einschalten der Außenbeleuchtungseinrichtungen 16 erforderlich machen können, übertragen, so können diese von der Verarbeitungseinrichtung 30 so verarbeitet werden, daß sämtliche Außenbeleuchtungseinrichtungen 16 eingeschalten werden, wenn das Kraftfahrzeug in ein solches Gebiet fährt, oder das momentan befahrene Gebiet zu einem solchen gemacht wird.

Auf diese Weise können kollektiv sämtliche Nebelschlußleuchten der Kraftfahrzeuge ein- beziehungsweise ausgeschaltet werden können. Besonders das Ausschalten der Nebelschlußleuchte und der Nebelscheinwerfer wird häufig vergessen und von anderen Verkehrsteilnehmern als störend empfunden.

In einer weiteren Ausführungsform können die Sollbereiche auch in einer externen Speichereinrichtung 40 untergebracht sein, welche mit der Verarbeitungseinrichtung 30 verbunden ist. Die dort abgelegten Daten werden dann bei Bedarf der Verarbeitungseinrichtung 30 zugeführt. Beispielsweise ist es auf diese Weise möglich die Daten regional unterschiedlich zu gestalten.

## Patentansprüche

1. Verfahren zum automatischen Schalten von Außenbeleuchtungseinrichtungen (16) eines Kraftfahrzeugs in Abhängig von den während des Betriebs herrschenden Umfeldbedingungen (18), dadurch gekennzeichnet, daß die Position und die Zeit (t) als Umfeldbedingungen (18), in denen das Kraftfahrzeug betrieben wird, erfaßt werden und die Außenbeleuchtungseinrichtungen (16) in Abhängigkeit derer geschaltet werden.

2. Verfahren nach Anspruch 1, dadurch gekennzeichnet, daß noch mindestens eine weitere Umfeldbedingung erfaßt wird und die Außenbeleuchtungseinrichtungen (16) in Abhängigkeit von Position, Zeit und der mindestens einen weiteren Umfeldbedingung geschaltet werden.

3. Verfahren nach Anspruch 2, dadurch gekennzeichnet, daß die mindestens eine weitere Umfeldbedingung in Abhängigkeit eines Parameters, insbesondere eines Empfindlichkeitsparameters, zum Schalten der Außenbeleuchtungseinrichtungen (16) führt.

4. Verfahren nach Anspruch 3, dadurch gekennzeichnet, daß der Parameter von Position (x) und Zeit (t) abhängig ist.

5. Verfahren nach einem der Ansprüche 2 bis 4, dadurch gekennzeichnet, daß die mindestens eine weitere Umfeldbedingung (18) die Umgebungshelligkeit ist.

6. Verfahren nach einem der Ansprüche 2 bis 4, dadurch gekennzeichnet, daß die mindestens eine weitere Umfeldbedingung (18) die Geschwindigkeit des Fahrzeugs ist.

7. Verfahren nach einem der Ansprüche 2 bis 4, dadurch gekennzeichnet, daß die mindestens eine weitere Umfeldbedingung (18) ein Funksignal ist.

8. Verfahren nach einem der vorhergehenden Ansprüche, dadurch gekennzeichnet, daß Sollbereiche für Position und Zeit bestimmt sind, innerhalb derer die Außenbeleuchtungseinrichtungen (16) eingeschalten sein sollen oder müssen, wobei diese Sollbereiche von Sonnenauf- und Sonnenuntergang bestimmt sein können.

9. Verfahren nach einem der vorhergehenden Ansprüche, dadurch gekennzeichnet, daß die Position des Kraftfahrzeugs durch ein im Kraftfahrzeug angeordnetes Navigationssystem (32) ermittelt wird.

10. Verfahren nach Anspruch 9, dadurch gekennzeichnet, daß das Navigationssystem (32) eine Karteneinrichtung zur Erkennung des Straßentyps aufweist.

11. Verfahren nach Anspruch 10 , dadurch gekennzeichnet, daß der Parameter in Abhängigkeit vom Straßentyp verändert wird.

12. Einrichtung zum automatischen Schalten von Außenbeleuchtungseinrichtungen (16) eines Kraftfahrzeugs in Abhängigkeit von den während des Betriebs herrschenden Umfeldbedingungen, insbesondere zum Durchführen des Verfahrens nach einem der vorhergehenden Ansprüche, dadurch gekennzeichnet, daß eine Positionserfassungseinrichtung (32) und eine Zeiterfassungseinrichtung (34) vorgesehen sind, und daß eine mit der Positionserfassungseinrichtung (32) und der Zeiterfassungseinrichtung (34) verbindbare, die Außenbeleuchtungseinrichtung (16) steuernde Verarbeitungseinrichtung (30) vorgesehen ist.

13. Einrichtung nach Anspruch 12, dadurch gekennzeichnet, daß mindestens ein Sensor (38) zur Erfassung der mindestens einen weiteren Umfeldbedingung (18) vorgesehen ist, dessen Signale (36) der Verarbeitungseinrichtung (30) zuführbar sind, welche die Außenbeleuchtungseinrichtungen (16) in Abhängigkeit von Position, Zeit und der Signale (36) steuert.

14. Einrichtung nach Anspruch 13, dadurch gekennzeichnet, daß die Signale (36) des Sensors (38) in der Verarbeitungseinrichtung über einen Parameter verarbeitbar sind.

15. Einrichtung nach Anspruch 14, dadurch gekennzeichnet, daß der Parameter von Position und Zeit abhängig ist.

16. Einrichtung nach Anspruch 12, dadurch gekennzeichnet, daß als Positionserfassungseinrichtung (32) ein im Kraftfahrzeug angeordnetes Navigationssystem vorgesehen ist.

17. Einrichtung nach Anspruch 16, dadurch gekennzeichnet, daß das Navigationssystem (32) eine Karteneinrichtung zur Erkennung des Straßentyps aufweist.

18. Einrichtung nach Anspruch 17, dadurch gekennzeichnet, daß der Parameter vom Straßentyp abhängig ist.

19. Einrichtung nach einem der Ansprüche 13 bis 18, dadurch gekennzeichnet, daß zur Erfassung weiterer Umfeldbedingungen eine Umgebungshelligkeitsmeßeinrichtung als Sensor (38) vorgesehen ist.

20. Einrichtung nach einem der Ansprüche 12 bis 19, dadurch gekennzeichnet, daß die Zeiterfassungseinrichtung (34) eine ferngesteuerte Uhr mit Datumserfassung aufweist.

21. Einrichtung nach einem der Ansprüche 12 bis 20, dadurch gekennzeichnet, daß in einer, mit der Verarbeitungseinrichtung (30) verbindbaren Speichereinrichtung (40), oder in der Verarbeitungseinrichtung (30) selbst, mindestens ein Sollbereich abgelegt ist, innerhalb dem die Außenbeleuchtungseinrichtungen (16) ein- beziehungsweise ausgeschaltet sein sollen oder müssen.

22. Einrichtung nach Anspruch 21, dadurch gekennzeichnet, daß in der mit der Verarbeitungseinrichtung (30) verbindbaren Speichereinrichtung (40), oder in der Verarbeitungseinrichtung (30) selbst, eine Vielzahl von Sollbereichen, abhängig von Sonnenauf- und Sonnenuntergang abgelegt sind.
